# EUROPEAN PATENT SPECIFICATION

(11) **EP 0 507 199 B1**
(45) Date of publication and mention of the grant of the patent: **24.05.1995**
(21) Application number: 92105088.6
(22) Date of filing: 25.03.1992
(51) Int. Cl.: F24B 1/182, A47J 37/07

(54) **Fireplace with oven for outdoor use**
Kamin mit Backofen zum Gebrauch im Freien
Chemineé à four pour utilisation à l'extérieur

(30) Priority: 02.04.1991 IT UD910010 U
(43) Date of publication of application: 07.10.1992
(73) Proprietor: PALAZZETTI LELIO SPA, I-33080 Porcia (PN) (IT)
(72) Inventor: Palazzetti, Lelio, I-33170 Pordenone (IT)
(74) Representative: Petraz, Gilberto Luigi

(56) References cited:
- EP-A- 0 098 232
- EP-A- 0 251 006
- DE-A- 3 633 142
- FR-A- 2 546 611
- US-A- 2 212 015
- US-A- 2 851 941
- US-A- 3 789 824

## Description

This invention concerns a fireplace with oven for outdoor use as set forth in the preamble of the main claim.

To be more exact, the fireplace according to this invention is generally located in the open air and consists of a barbecue, which enables meat or other food to be cooked on charcoal or on a grill and is associated with an oven which enables food to be cooked or heated.

The state of the art contains barbecues and ovens located out-of-doors. These barbecues can be moved and consist generally of a metallic material or are situated in stationary positions and then generally consist of a refractory material.

The ovens used out-of-doors generally consist of a refractory material and are not associated with a barbecue.

Thus, the state of the art covers barbecues and ovens positioned out-of-doors but constituting two separate and fully independent elements.

The fact that a barbecue and an oven are two separate elements leads to great problems of space and difficulties in fitting them into an external environment consisting, for instance, of a garden with many plants, where the separate inclusion of the oven and of the barbecue is unsightly.

Moreover, the fact that the barbecue and oven are two separate elements entails a great consumption of energy since arrangements have to be made to supply the two units separately.

The document US-A-3,789,824 discloses an oven with a superimposed barbecue in which, however, the fumes pass through the barbecue and surround the food placed therein often giving to the food unpleasant tastes.

Furthermore, the oven has to be heated with charcoal and then cleaned before the food can be introduced, thus involving also a great waste of time and heat.

The present applicant has designed, tested and embodied this invention to obviate the shortcomings of the state of the art and achieve further advantages.

This invention is set forth and characterized in the main claim, while the dependent claims describe variants of the idea of the main embodiment.

The main purpose of this invention is to provide a fireplace for outdoor use which carries out at the same time the functions of a barbecue and of an oven by using one single source of heat.

The feeding of energy to the fireplace of this invention enables the two-fold functions of a barbecue and of an oven to be carried out with a great saving of energy and a reduction in the quantity of fumes.

In fact, the heat developed in cooking the food on the barbecue is also employed to keep the oven at a temperature capable of cooking the food in the oven.

Moreover, to cook the food in the oven does not require the cleaning of the oven with a subsequent introduction of the food thereinto and with a resulting loss of heat since the fumes are retained to lap the ceiling of the oven.

The ability to have a barbecue and an oven in one single bearing structure leads to a great saving of materials and a considerable reduction of costs as compared to separated barbecues and ovens.

The presence of the barbecue and oven in one single body simplifies the problems of space and the appearance of the environment in a noteworthy manner.

The barbecue and oven are connected by a suitable conduit for the passage of the fumes and relative heat from the barbecue, where the energy supply is provided, to the oven.

In this way the fumes generated by the charcoal in the barbecue are transferred through the conduit into the oven, are kept in the upper part of the oven and are then dispersed to the outside environment by passing through a flue leading to the chimney, this flue being connected to the upper part of the oven.

Suitable baffles constrain the fumes coming from the barbecue to follow an obligatory path within the oven so as to achieve a prolonged stay of these fumes in the oven and to make possible a suitable distribution of heat downwards from above without the fumes surrounding the food, the purpose being to accomplish a homogeneous cooking of the food in the oven.

According to a variant a suitable movable screen may be positioned in front of the barbecue chamber in cooperation with the barbecue. This movable screen shields the user from the heat of the flame and assists the draught of the fumes by hindering them from escaping from the front.

The screen can oscillate upwards advantageously to allow the wood and food to be introduced and to permit access to the food for the normal cooking operations.

The attached figures are given as a non-restrictive example and show a preferred embodiment of the invention as follows:-
- Fig.1: is a front view of the fireplace of this invention;
- Fig.2: shows a lengthwise section of Fig.1 along the line A-A;
- Fig.3: shows a variant of the fireplace of the invention along the section C-C of Fig.4;
- Fig.4: shows the section B-B of Fig.3.

In the figures a fireplace with an oven for outdoor use according to the invention is referenced generally with the number 10.

The fireplace 10 consists generally of a barbecue 11 and oven 12 connected by a suitable connecting conduit 17 which enables the fumes and heat to pass from the barbecue 11, where the energy supply takes place, to the oven 12 in a high part of the oven 12 so that the fumes always stay in contact with the ceiling of the oven 12.

Thereafter the fumes pass through a hood 13 connected to the top of the oven and are dispersed outside through a chimney 14.

In this example the barbecue 11 is supported on a supporting base 15 so as to make the barbecue 11 more readily accessible to a user.

Moreover, the supporting base 15 can act advantageously as a store for wood and/or a support for fire-irons, cooking utensils or other items.

The barbecue 11 consists of a barbecue chamber 16 open at the front so as to be accessible to a user.

As is known in the state of the art and therefore unimportant for the purposes of the invention, charcoal for the cooking is deposited in the barbecue chamber 16.

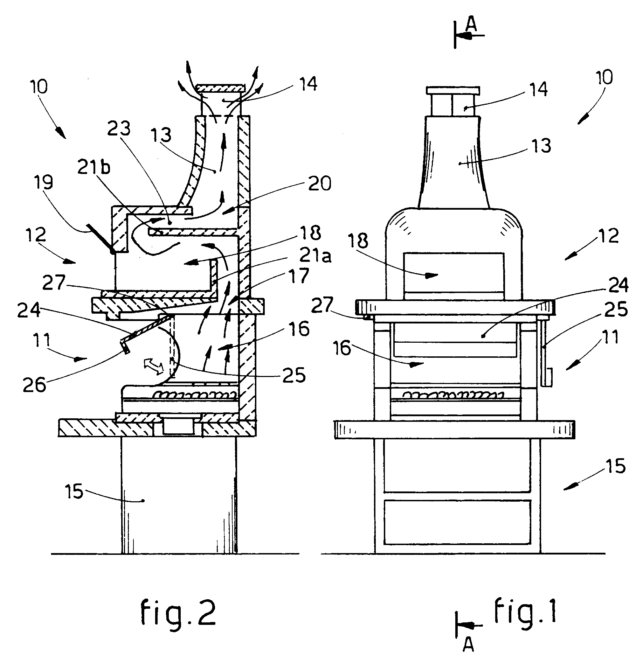

In the example of Figs.1 and 2 the oven 12 is positioned exactly above the barbecue 11.

The barbecue chamber 16 contains in its upper portion a conduit 17 for connection to the upper part of an oven chamber 18 of the oven 12, which has a substantially horizontal ceiling.

The oven chamber 18 comprises in its frontal portion an openable door 19 which, after the food to be cooked has been introduced, stays closed so as not to let the heat escape and is opened only to have access to the food.

The oven chamber 18 contains in its upper portion a flue 20 for connection to a hood 13, whence the fumes are discharged.

In passing from the barbecue chamber 16 to the hood 13, the fumes pass through the upper part of the oven chamber 18 and lap the ceiling thereof.

Suitable deviator baffles 21 are included within the oven chamber 18 and constrain the fumes leaving the barbecue chamber 16 to follow an obligatory path which keeps the fumes in the upper part.

These deviator baffles 21 enable the fumes to be kept for a prolonged period within the oven chamber 18 and make possible a suitable distribution of heat, which acts either by direct emission of the fumes or by radiation of the ceiling of the oven chamber 18 and of the deviator baffles 21 so as to achieve homogeneous cooking of the food in the oven chamber 18.

A substantially vertical deviator baffle 21a prevents the fumes coming into direct contact with the food, whereas a substantially horizontal deviator baffle 21b constrains the fumes to pass above the food and to remain in the upper part of the oven chamber 18.

The deviator baffle 21b in the oven chamber 18 forms with its upper side a reverberation conduit 23, which constrains the fumes to stay for a longer time within the oven chamber 18 so as to obtain greater use of the heat.

According to a variant the barbecue chamber 16 comprises at its front a movable screen 24, which is pivoted at its upper end about a pivot 27 and can be swung upwards.

This movable screen 24 is operated in this case by moving a lever 25 connected to the movable screen 24 by the pivot 27.

When the lever 25 is actuated, the movable screen 24 is rotated about the pivot 27, so that the movable screen 24 has at least two positions, an open position and a closed position.

The movable screen 24 in its open position is substantially horizontal, so that wood and food can be introduced, or the fire can be poked, or normal cooking operations can be performed such as flavouring the food during the cooking, for instance.

The movable screen 24 in its closed position is substantially vertical so as to shelter the user from the heat and to assist the draught of the fumes by preventing them from escaping forwards.

In this example the movable screen 24 comprises a terminal containment projection 26 to hinder the escape of fumes from the front.

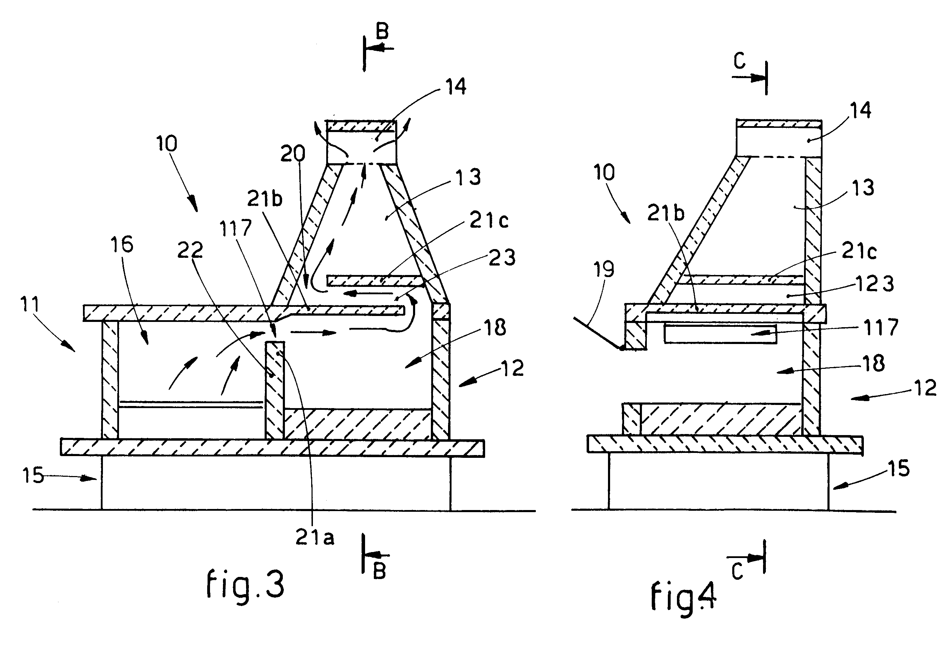

According to a variant shown in Figs.3 and 4 the oven 12 and barbecue 11 are placed side by side, with at least one connecting conduit 117 contained in their common wall of contact 22 so as to transfer fumes from the barbecue chamber 16 to the oven chamber 18.

In this case the contact wall 22 acts also as a deviator baffle 21a.

As in the case shown in Figs.1 and 2, a substantially horizontal deviator baffle 21b is included in the upper portion of the oven chamber 18.

In this example a substantially horizontal, secondary, suitable deviator baffle 21c is included above the deviator baffle 21b. Thus, a reverberation conduit 123 is created between the baffles 21b and 21c and performs the same functions as the reverberation conduit 23 described earlier.

According to a further variant, which is not shown here, the oven 12 is located at the rear of the barbecue 11, and the contact wall between them contains at least one connecting conduit to transfer the fumes from the barbecue chamber 16 to the oven chamber 18.

## Claims

1. A fireplace for outdoor use in the cooking of foods, which comprises a barbecue (11) with a barbecue chamber (16) and an oven (12) with an oven chamber (18) and includes a chimney (14) for discharge of fumes and possibly a supporting base (15), in which fireplace a conduit (7, 117) for the escape of fumes from the barbecue chamber (16) to the oven chamber is provided, the oven chamber (18) has a substantially horizontal ceiling with a flue (20) connection to the chimney (14) positioned above the ceiling of the oven chamber (18), characterized in that the oven chamber (18) is positioned downstream of the barbecue chamber (16) and in that a deviator baffle (21a; 22) extending substantially vertically is positioned at the entry to the oven chamber (18) to form the conduit means (117) in cooperation with the ceiling for the through passage of fumes along the ceiling; the flue (20) connection to the chimney (14) is arranged on the opposite side of the ceiling to the deviator baffle (21) such that the fumes only pass along the ceiling of the oven chamber (18).

2. Fireplace as claimed in Claim 1, in which the oven (12) is positioned at least partially above the barbecue (11).

3. Fireplace as claimed in Claim 1, in which the oven (12) is positioned at least partially alongside the barbecue (11).

4. Fireplace as claimed in any claim hereinbefore, in which the connecting conduit (17) is at least partly defined by the substantially vertically extending deviator baffle (21a).

5. Fireplace as claimed in any claim hereinbefore, in which the oven chamber (18) cooperates with the flue (20) connected to the chimney (14) around a deviator baffle (21b) positioned in its upper portion and extending substantially horizontally so as to define a reverberation conduit (23-123).

6. Fireplace as claimed in any claim hereinbefore, which comprises a movable screen (24) in front of the barbecue chamber (16).

7. Fireplace as claimed in claim 6 hereinbefore, in which the movable screen (24) is pivoted at its upper end and can be swung upwards.

## Patentansprüche

1. Kamin zur Zubereitung von Speisen im Freien, der ein Barbecue (11) mit einer Barbecuekammer (16) und einen Ofen (12) mit einer Ofenkammer (18) und einen Rauchfang (14) zum Abführen der Rauchgase sowie eventuell ein Traggestell (15) aufweist, wobei ein Kanal (7, 117) für die Abfuhr der Rauchgase von der Barbecuekammer (16) zur Ofenkammer vorgesehen ist und die Ofenkammer (18) eine im wesentlichen horizontale Decke mit einem Rauchabzugskanal (20) zur Verbindung mit dem Rauchfang (14) oberhalb der Decke der Ofenkammer (18) aufweist, **dadurch gekennzeichnet**, daß die Ofenkammer (18) in Strömungsrichtung der Rauchgase nach der Barbecuekammer (16) angeordnet ist, und daß eine sich im wesentlichen vertikal erstreckende Leitfläche (21a; 22) am Eintritt in die Ofenkammer (18) angeordnet ist, um im Zusammenwirken mit der Decke das Führungsorgan (117) für das Durchströmen der Rauchgase entlang der Decke zu bilden, wobei die Verbindung zum Rauchfang (14) durch den Rauchabzugskanal (20) an der der Leitfläche (21) entgegengesetzten Seite der Decke angeordnet ist, derart, daß die Rauchgase nur entlang der Decke der Ofenkammer (18) strömen.

2. Kamin nach Anspruch 1, bei dem der Ofen (12) mindestens teilweise oberhalb des Barbecues (11) angeordnet ist.

3. Kamin nach Anspruch 1, bei dem der Ofen (12) mindestens teilweise seitlich des Barbecues (11) angeordnet ist.

4. Kamin nach einem der vorstehenden Ansprüche, bei dem der Verbindungskanal (17) mindestens teilweise durch die sich im wesentlichen vertikal erstreckende Leitfläche (21a) gebildet ist.

5. Kamin nach einem der vorstehenden Ansprüche, bei dem die Ofenkammer (18) mit dem mit dem Rauchfang (14) verbundenen Rauchabzugskanal (20) rund um eine in ihrem oberen Teil angeordnete und sich im wesentlichen vertikal erstreckende Leitfläche (21b) zusammenwirkt, so daß ein Rückstrahlkanal (23-123) gebildet wird.

6. Kamin nach einem der vorstehenden Ansprüche, der einen bewegbaren Schirm (24) an der Vorderseite der Barbecuekammer (16) aufweist.

7. Kamin nach Anspruch 6, bei dem der bewegbare Schirm (24) an seinem oberen Ende angelenkt und nach oben schwenkbar ist.

## Revendications

1. Cheminée pour utilisation en extérieur pour la cuisson d'aliments, comportant un barbecue (11) avec une chambre de barbecue (16) et un four (12) avec une chambre de four (18), comportant une cheminée (14) de dégagement des fumées et pouvant comporter une base-support (15), cheminée dans laquelle un conduit (7,117) est prévu pour l'échappement des fumées de la chambre de barbecue (16) vers la chambre de four, la chambre de four (18) ayant une voûte sensiblement horizontale avec un carneau (20) de connection à la cheminée (14) positionné au-dessus de la voûte de la chambre de four (18), caractérisée en ce que la chambre de four (18) est positionnée en aval de la chambre de barbecue (16) et en ce qu'une chicane de déviation (21a,22) s'étendant sensiblement verticalement est positionnée à l'entrée de la chambre de four (18) pour former le moyen de conduction (117) en coopération avec la voûte pour la traversée du carneau (20) de fumée le long de la voûte ; la connection à la cheminée (14) étant disposée sur le côté opposé de la voûte vers la chicane de déviation (21), de telle sorte que les fumées passent uniquement le long de la voûte de la chambre de four (18).

2. Cheminée selon la revendication 1 dans laquelle le four (12) est positionné au moins partiellement au-dessus du barbecue (11).

3. Cheminée selon la revendication 1 dans laquelle le four (12) est positionné au moins partiellement latéralement le long du barbecue (11).

4. Cheminée selon l'une des revendications précédentes dans laquelle le conduit de connection (17) est défini au moins en partie par la chicane de déviation (21) s'étendant sensiblement verticalement.

5. Cheminée selon l'une des revendications précédentes dans laquelle la chambre de four (18) coopère avec le carneau (20) connecté à la cheminée (14) autour d'une chicane de déviation (21b) positionné dans la partie supérieure et s'étendant sensiblement horizontalement de façon à définir un conduit de réverbération (23,123).

6. Cheminée selon l'une des revendications précédentes et comprenant un écran mobile (24) en avant de la chambre de barbecue (16).

7. Cheminée selon la revendication 6 dans laquelle l'écran mobile (24) est monté pivotant par sa partie supérieure et peut pivoter vers le haut.
